# EUROPEAN PATENT SPECIFICATION

(11) **EP 3 359 943 B1**
(45) Date of publication and mention of the grant of the patent: **15.07.2020**
(21) Application number: 15788451.1
(22) Date of filing: 08.10.2015
(51) Int. Cl.: G01M 7/02, G01M 7/06, G01M 15/02, G01M 99/00, G01V 1/00

(54) **METHOD AND ARRANGEMENT FOR TESTING EARTHQUAKE RESISTANCE OF AN ENGINE**
VERFAHREN UND ANORDNUNG ZUR PRÜFUNG DER ERDBEBENSICHERHEIT EINES MOTORS
PROCÉDÉ ET DISPOSITIF POUR TESTER LA RÉSISTANCE AUX TREMBLEMENTS DE TERRE D'UN MOTEUR

(43) Date of publication of application: 15.08.2018
(73) Proprietor: Wärtsilä Finland Oy, 65100 Vaasa (FI)
(72) Inventor: DEGANO, Francesco, I-34018 Trieste (IT); SKOG, Sanna-Sofia, FI-65100 Vaasa (FI); PARO, Claus, FI-65100 Vaasa (FI); ALAPIHA, Simo, FI-65100 Vaasa (FI)
(74) Representative: Berggren Oy, Helsinki & Oulu
(86) International application number: PCT/FI2015/050673
(87) International publication number: WO 2017/060558

(56) References cited:
- WO-A1-2014/087710
- GB-A- 2 267 470
- US-A1- 2006 075 819
- US-B1- 6 876 957

## Description

### Technical field of the invention

The present invention relates to a method for testing earthquake resistance of an internal combustion engine, as defined in claim 1. The invention also concerns a test arrangement for testing earthquake resistance of an internal combustion engine, as defined in the other independent claim.

### Background of the invention

Internal combustion engines are often used in applications, where reliable running of the engines is highly important, and the engines also need to be operable in extreme conditions, for instance during an earthquake. One example of such use is nuclear power plants, where internal combustion engines can be used for providing electric power to the critical systems of the power plant, such as cooling systems, during disruptions in the supply of electric power via a power grid. Another example could be hospitals, where internal combustion engines are often used as a secondary power supply to ensure availability of electric power during disturbances in a power grid.

Because of the importance of reliable operation also during and after an earthquake, the earthquake resistance of internal combustion engines that are used in critical applications needs to be qualified. The qualification of engine-generator sets (gensets) can be done either by analyzing or testing the various components of the gensets or by combining the two methods. The problem with the analysis is that each component of the genset needs to be analyzed separately and detailed 3D models of the components are needed. In addition, qualification by analysis is not a very practical tool for assessing how the operability of a component is maintained during an earthquake.

If both the structural integrity and operability of the components after an earthquake needs to be qualified, testing is often used. Testing of components is usually done by attaching the components to a test bench, which can simulate the accelerations during an earthquake. Each component is tested separately and the components are usually not functioning when being attached to the test bench. Therefore, the functioning of the components is only tested after the earthquake simulation, and the operability during an earthquake needs to be qualified by analyzing the components.

What is common to most prior art methods of seismic qualification is that the whole process is long, complicated, time consuming and expensive.

Document EP 2930491 A1 discloses a test device for executing various tests, such as vibration tests. The device allows vibrations of an earthquake to be imitated. The device comprises cylinders for moving a base plate, which supports an object to be tested. Another document of the prior art GB2267470A describes a method and apparatus for in-flight shake testing of an aircraft fuselage.

### Summary of the invention

An object of the present invention is to provide an improved method for testing earthquake resistance of an internal combustion engine. The characterizing features of the method according to the invention are given in claim 1. Another object of the invention is to provide an improved test arrangement for testing earthquake resistance of an internal combustion engine. The characterizing features of the test arrangement are given in the other independent claim. The method according to the invention comprises the steps of operating the engine and simultaneously subjecting the engine to an excitation, which is not encountered during normal operation of the engine.

The arrangement according to the invention comprises an internal combustion engine and means for subjecting the engine to an excitation not encountered during normal operation of the engine.

The method and arrangement according to the invention provide a quicker and cheaper way to test the earthquake resistance of the engine. The whole engine and also the generator and different auxiliaries of the engine can be tested simultaneously. Detailed models of different components of the genset are not necessarily needed.

The engine can be subjected to internal and/or external excitations. Internal excitations can be induced by modifying the engine or the operation of the engine. For instance, a rotating mass of the engine can be used for generating an internal excitation, for instance by unbalancing the rotating mass. According to an embodiment of the invention, at least one of the counterweights of the crankshaft of the engine is removed for causing an internal excitation. Alternatively or in addition to that, at least one unbalancing mass can be attached to a rotating part of the engine for causing an internal excitation. The unbalancing mass can be attached, for instance, to a flywheel of the engine or it can be connected to a camshaft of the engine.

Internal excitations can also be induced by modifying the power output of at least one cylinder of the engine for making the power output of said cylinder to differ from the power output of at least one other cylinder of the engine. The power output can be modified, for instance, by disabling ignition in at least one cylinder of the engine. A higher order excitation can be induced by connecting a device causing a higher order excitation to the engine.

A benefit of using internal excitations is that it is quick, easy and inexpensive to implement. Only a little design and procurement work is needed.

According to an embodiment of the invention, the engine is operated mounted on a base frame that is resiliently supported against the ground. The engine can be coupled to a generator that is mounted on the same base frame with the engine. With a common base frame for the engine and the generator, the whole genset can be tested simultaneously. Instead of a generator, some other external load could be coupled to the engine.

According to an embodiment of the invention, the arrangement comprises at least one external excitation source, such as a vibration compensator.

An external excitation can be induced by mounting an external excitation source on the base frame. The external excitation source can be a vibration compensator. The base frame can thus work as a testing platform, which also accommodates external excitation sources. The use of vibration compensators as an external excitation source has the benefits that vibration compensators are readily available and they can be easily adapted for the use as excitation sources. Depending on the requirements set by clients and/or regulatory bodies, internal excitations may be sufficient for testing the engine mounted components, but external excitation sources may be needed for qualifying the earthquake resistance of a complete genset.

According to an embodiment of the invention, the vibrations of the engine are monitored. By monitoring the vibrations, the effect of the excitations can be verified.

### Brief description of the drawings

Embodiments of the invention are described below in more detail with reference to the accompanying drawings, in which
Fig. 1 shows an engine-generator set that is mounted on a common base frame,
Fig. 2 shows part of a flywheel of the engine with an unbalancing mass, and
Fig. 3 shows an unbalancing mass for a cam gear of the engine.

### Description of embodiments of the invention

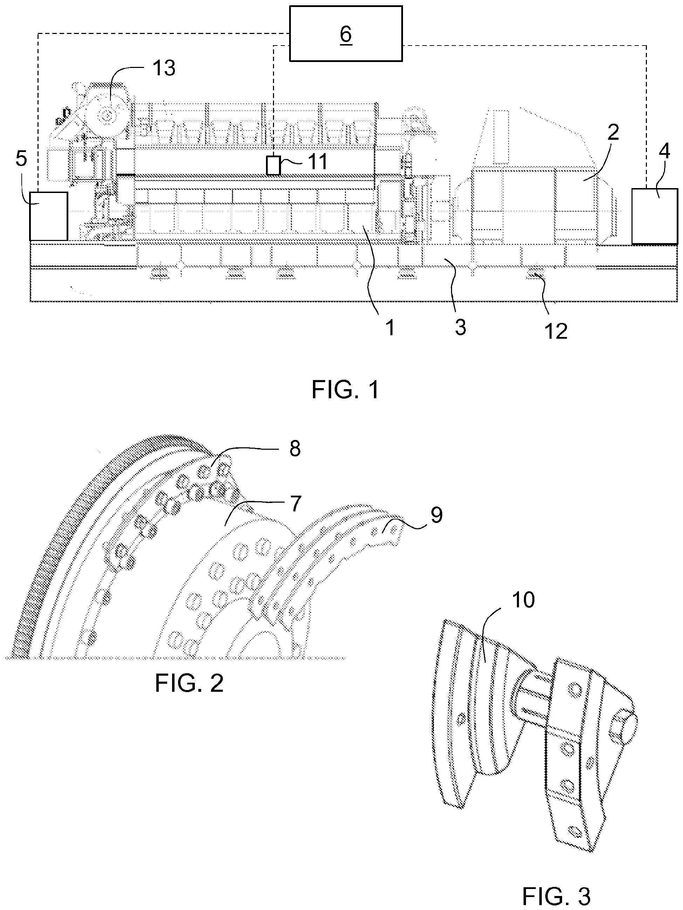

In figure 1 is shown an engine-generator set (genset), which comprises an internal combustion engine 1 and a generator 2 coupled to the engine 1. The engine 1 is a piston engine. The engine 1 is a large piston engine having a rated power of at least 150 kW per cylinder and a cylinder bore of at least 150 mm. The engine 1 can be operated using either liquid or gaseous fuel or a combination of both. Suitable liquid fuels are, for instance, light fuel oil, heavy fuel oil or marine diesel oil. The gaseous fuel could be, for instance, natural gas. The engine 1 shown in figure 1 is a V-engine comprising 16 cylinders. However, the engine 1 could comprise any reasonable number of cylinders, and the cylinders could also be arranged in line. The engine-generator set is configured to produce electricity at a predetermined frequency. The generator 2 can be coupled to the engine 1 with any conventional coupling means. The genset could be used, for instance, for supplying electricity to a nuclear power plant during disturbances in a power grid. The genset could thus power the critical systems of a nuclear power plant when electricity is not available via the normal electrical grid. The engine 1 and the generator 2 are mounted on a common base frame 3. The base frame 3 forms a rigid platform, which supports both the engine 1 and the generator 2. The base frame 3 is supported resiliently against the ground. The genset is provided with a plurality of elastic support elements 12, which are used for supporting the base frame 3 against the ground. The support elements 12 are configured to reduce transmission of vibrations from the genset to the ground. The support elements 12 also reduce transmission of vibrations from the ground to the genset, for example during an earthquake.

In order to verify functioning of the engine 1 and/or the whole genset during and/or after an earthquake, a method and arrangement for testing earthquake resistance of the engine 1 and/or the genset is provided. According to the invention, the engine 1 is operated and simultaneously subjected to at least one excitation that is not encountered during normal operation of the engine 1. The excitation can be either internal or external and it is configured to induce vibrations in the engine 1 and/or in the genset. The operation of the engine 1 means running of the engine 1 according to a certain pattern. During the test, the rotation speed of the engine 1 can be constant or varying. The rotation speed can be adjusted to induce desired excitations, or the engine 1 can go through a certain test procedure, which can include different speeds and/or loads. The arrangement for testing earthquake resistance of the engine 1 comprises means for subjecting the engine 1 to an excitation not encountered during normal operation of the engine 1. By means of the testing method and arrangement the effects of an earthquake on the engine 1, generator 2 and different auxiliaries of the engine 1 can thus be simulated. Normal operation of the engine 1 means the intended use of the engine 1. In the case of a genset, it is thus the operation of the genset for producing electricity with the desired frequency. The method and arrangement according to the invention could also be used for testing an engine 1 that is intended for another kind of use. In that case, the normal operation of the engine 1 would refer to the operation of the engine 1 with another kind of load.

The expression "internal excitation" refers to a modification in the construction or operation of the engine 1 that causes unbalanced forces or torques not encountered during normal operation of the engine 1. The expression "external excitation" refers to an excitation that is caused by an external excitation source. In order to cause forces having the desired direction and a magnitude that falls within a desired range, several internal and/or external excitations can be combined. The excitations are configured to cause such vibrations in the engine 1, the generator 2 and/or the auxiliaries of the engine 1, which simulate the vibrations caused by an earthquake. Depending on the geographical location where the engine 1 is to be used, the required excitations may be different. If the engine 1 is going to be used in an area with high seismic activity, it has to tolerate higher accelerations than an engine that is used in a more stable location. Also the intended use of the engine 1 may influence the required earthquake resistance. For instance, in certain applications it may be adequate that the engine 1 maintains its operability during and/or after an earthquake that is likely to occur once during a period of ten years, but in some applications the engine 1 may need to maintain its operability during and/or after any imaginable earthquake.

Internal excitations can be generally generated by unbalancing one or more rotating masses of the engine 1 or by modifying the power outputs of selected cylinders of the engine 1. Rotating masses of the engine 1 include, for instance, the crankshaft and the camshaft. The crankshaft of a piston engine 1 is usually provided with counterweights, which compensate the weight of the crank webs and crankpins. One way of unbalancing the rotating parts of the engine 1 is to remove one or more of the counterweights of the crankshaft. Alternatively or additionally, one or more of the counterweights could be replaced by a heavier counterweight or additional counterweights could be attached to the crankshaft. However, it is simpler to remove the counterweights than manufacture different counterweights to replace or supplement existing counterweights.

Another way of unbalancing the rotating parts of the engine 1 is to attach one or more unbalancing masses to rotating parts that are connected to the crankshaft. In figure 2 is shown a flywheel 7 of the engine 1. The flywheel 7 is attached to the crankshaft of the engine 1. The genset is provided with an unbalancing mass 8, which is attached to the flywheel 7. Figure 2 also shows additional unbalancing masses 9 that can be attached to the flywheel 7. The additional unbalancing masses 9 can be used for increasing the internal excitations.

Instead or in addition to the unbalancing of the crankshaft, a camshaft of the engine 1 can be unbalanced for causing internal excitations. In figure 3 is shown an unbalancing mass 10, which can be attached to the camgear of the engine 1. In a four stroke engine 1, the rotation speed of the camshaft is half of the rotation speed of the crankshaft. By unbalancing the camshaft, mass forces with different frequency can thus be created.

Internal excitations can also be created by modifying the power outputs of certain cylinders of the engine 1. By having a different power output in one or in a few cylinders, abnormal vibrations can be induced. The modification of power outputs can be implemented, for instance, by disabling ignition in one or more cylinders. In a spark ignition engine, the functioning of spark plugs can be disabled in selected cylinders. In a compression ignition engine, the fuel injection into selected cylinders can be disabled. The test arrangement can be further provided with external devices that are driven by the engine 1 and configured to create excitations of higher order. The devices can be gears mounted on the engine 1 or on the base frame 3.

The benefits of using internal excitations include that the testing is easy and inexpensive. In the simplest form, the testing can be done by removing some counterweights of the engine 1 and/or by configuring the control unit of the engine 1 to implement modified power outputs of certain cylinders. Also additional unbalancing masses are an easy and expensive way for inducing excitations.

A drawback of using only internal excitations for testing the earthquake resistance of the engine 1 is that no axial excitations can be achieved. Also, the magnitude of the accelerations is limited and it is not possible to run a normal testing procedure of the engine simultaneously with the earthquake resistance testing. For creating also axial excitations and achieving higher accelerations, the internal excitations can be replaced or complemented by external excitations.

For creating external excitations, the test arrangement of figure 1 is provided with two external excitation sources 4, 5. A first external excitation source 4 is configured for causing forces in the transversal direction of the genset and a second external excitation source 5 is configured for causing forces is the longitudinal direction of the genset. In the embodiment of figure 1, the first external excitation source 4 is arranged at the generator end of the genset and the second external excitation source 5 is arranged at the free end of the engine 1. Compared to a standard base frame, the base frame 3 used in the test arrangement has been modified by increasing its length to accommodate the external excitation sources 4, 5. Instead of mounting the excitation sources 4, 5 on the base frame 3, the excitation sources 4, 5 could be arranged on the ground and cause excitations by directing forces to the base frame 3 or directly to the engine 1 or the generator 2.

The external excitation sources 4, 5 can be, for instance, vibration compensators. A vibration compensator is a device, which is designed to deliver a cyclic force with a certain frequency and direction. Vibration compensators can be used for instance in ships for delivering counterforces compensating the forces created by the engines and propellers. A vibration compensator typically comprises a number of rotating masses, which are driven by an electric motor. The masses can be adjusted to provide the required counterforce. The motor is synchronized with the main engine of the ship in order to maintain the appropriate phase difference between the force created by the vibration source and the counterforce provided by the vibration compensator. The use of vibration compensators as the external excitation sources 4, 5 has the benefit that vibration compensators are readily available and can be easily configured for the use as excitation sources.

When the earthquake resistance of the engine 1 is tested, the engine 1 is operated coupled to the generator 2. If only internal excitation is used, the rotation speed of the engine 1 needs to be adapted to induce the desired excitations. If the test arrangement is provided with external excitation sources 4, 5, the engine 1 can be operated using the desired rotation speed and load. For instance, the engine 1 can go through a normal factory acceptance test procedure simultaneously with the earthquake testing. The test arrangement is provided with a control unit 6, which is connected to the external excitation sources 4, 5 for controlling the rotation speeds of the external excitations sources. The test arrangement is further provided with a vibration sensor 11, which is configured to monitor the vibrations of the engine 1. The control unit 6 is connected to the vibration sensor 11. The vibrations induced by the excitations can thus be analyzed. Since the engine 1 and the generator 2 are arranged on a common base frame 3, the operation of the whole genset can be tested simultaneously. Also the auxiliaries of the engine 1 that are attached to the engine 1, such as the turbocharger 13 or the lubrication oil pump, experience the forces created by the internal or external excitations. Also the functioning of the auxiliaries can thus be verified in connection with the testing of the genset. Preferably the base frame 3 is configured to accommodate different engine sizes to allow the same base frame 3 to be used for different engines 1 and gensets.

It will be appreciated by a person skilled in the art that the invention is not limited to the embodiments described above, but may vary within the scope of the appended claims.

## Claims

1. A method for testing earthquake resistance of an internal combustion engine (1), the method comprising the steps of operating the engine (1) and simultaneously subjecting the engine (1) to at least one excitation, which is not encountered during normal operation of the engine (1), **characterized in that** at least one internal excitation is induced by modifying the engine (1) or the operation of the engine (1), causing unbalanced forces or torques, not encountered during normal operation of the engine.

2. A method according to claim 1, wherein the engine (1) is operated so that at least one of the rotating masses (7) of the engine (1) is unbalanced for causing an internal excitation.

3. A method according to claim 1 or 2, wherein at least one of the counterweights of the crankshaft of the engine (1) is removed for causing an internal excitation.

4. A method according to any of the preceding claims, wherein at least one unbalancing mass (8, 9, 10) is attached to a rotating part (7) of the engine (1) for causing an internal excitation.

5. A method according to any of the preceding claims, wherein an unbalancing mass (8, 9) is attached to a flywheel (7) of the engine (1) for causing an internal excitation.

6. A method according to any of the preceding claims, wherein an unbalancing mass (10) is connected to a camshaft of the engine (1) for causing an internal excitation.

7. A method according to any of the preceding claims, wherein the power output of at least one cylinder of the engine (1) is modified for making the power output of said cylinder to differ from the power output of at least one other cylinder of the engine (1) for causing an internal excitation.

8. A method according to any of the preceding claims, wherein ignition is disabled in at least one cylinder of the engine (1) for causing an internal excitation.

9. A method according to any of the preceding claims, wherein the engine (1) is operated with a device causing a higher order excitation connected to the engine (1).

10. A method according to any of the preceding claims, wherein the engine (1) is subjected to at least one external excitation.

11. A method according to any of the preceding claims, wherein the engine (1) is operated mounted on a base frame (3) that is resiliently supported against the ground and an external excitation source (4, 5) that is mounted on the base frame (3) is used for causing an external excitation.

12. A method according to any of the preceding claims, wherein the vibrations of the engine (1) are monitored.

13. A test arrangement for testing earthquake resistance of an internal combustion engine (1), the test arrangement comprising an internal combustion engine (1) and means (4, 5, 8, 9, 10) for subjecting the engine (1) to an excitation not encountered during normal operation of the engine (1), **characterized in that** the arrangement comprises means (8, 9, 10) that are configured to modify the engine (1) or the operation of the engine (1) to induce at least one internal excitation, causing unbalanced forces or torques not encountered during normal operation of the engine (1).

14. A test arrangement according to claim 13, wherein at least one rotating mass (7) of the engine (1) is unbalanced for causing an internal excitation.

15. A test arrangement according to claim 13 or 14, wherein the arrangement comprises at least one sensor (11) for measuring vibrations of the engine (1).

## Patentansprüche

1. Verfahren zum Testen der Erdbebensicherheit eines Verbrennungsmotors (1), wobei das Verfahren die Schritte des Betreibens des Motors (1) und des gleichzeitigen Aussetzens des Motors (1) mindestens einer Erregung umfasst, die während des normalen Betriebs des Motors (1) nicht auftritt, **dadurch gekennzeichnet, dass** mindestens eine interne Erregung durch Modifizieren des Motors (1) oder des Betriebs des Motors (1) induziert wird, wodurch unausgeglichene Kräfte oder Drehmomente hervorgerufen werden, die während des normalen Betriebs des Motors nicht auftreten.

2. Verfahren nach Anspruch 1, wobei der Motor (1) derart betrieben wird, dass mindestens eine der rotierenden Massen (7) des Motors (1) unausgeglichen ist, um eine interne Erregung hervorzurufen.

3. Verfahren nach Anspruch 1 oder 2, wobei mindestens eines der Gegengewichte der Kurbelwelle des Motors (1) entfernt wird, um eine interne Erregung hervorzurufen.

4. Verfahren nach einem der vorhergehenden Ansprüche, wobei mindestens eine Unwuchtmasse (8, 9, 10) an einem rotierenden Teil (7) des Motors (1) angebracht ist, um eine interne Erregung hervorzurufen.

5. Verfahren nach einem der vorhergehenden Ansprüche, wobei eine Unwuchtmasse (8, 9) an einem Schwungrad (7) des Motors (1) befestigt ist, um eine interne Erregung hervorzurufen.

6. Verfahren nach einem der vorhergehenden Ansprüche, wobei eine Unwuchtmasse (10) mit einer Nockenwelle des Motors (1) verbunden ist, um eine interne Erregung hervorzurufen.

7. Verfahren nach einem der vorhergehenden Ansprüche, wobei die Leistungsabgabe von mindestens einem Zylinder des Motors (1) modifiziert wird, damit sich die Leistungsabgabe des Zylinders von der Leistungsabgabe von mindestens einem anderen Zylinder des Motors (1) unterscheidet, um eine interne Erregung hervorzurufen.

8. Verfahren nach einem der vorhergehenden Ansprüche, wobei die Zündung in mindestens einem Zylinder des Motors (1) deaktiviert ist, um eine interne Erregung hervorzurufen.

9. Verfahren nach einem der vorhergehenden Ansprüche, wobei der Motor (1) mit einer Vorrichtung betrieben wird, die eine Erregung höherer Ordnung, die mit dem Motor (1) verbunden ist, hervorruft.

10. Verfahren nach einem der vorhergehenden Ansprüche, wobei der Motor (1) mindestens einer externen Erregung unterworfen wird.

11. Verfahren nach einem der vorhergehenden Ansprüche, wobei der Motor (1) auf einem Grundrahmen (3) montiert betrieben wird, der elastisch gegen den Boden abgestützt ist, und eine externe Erregungsquelle (4, 5), die auf dem Grundrahmen (3) montiert ist, verwendet wird, um eine externe Erregung hervorzurufen.

12. Verfahren nach einem der vorhergehenden Ansprüche, wobei die Schwingungen des Motors (1) überwacht werden.

13. Testanordnung zum Testen der Erdbebensicherheit eines Verbrennungsmotors (1), wobei die Testanordnung einen Verbrennungsmotor (1) und Mittel (4, 5, 8, 9, 10) zum Unterwerfen des Motors (1) einer Erregung, die während des normalen Betriebs des Motors (1) nicht auftritt, **dadurch gekennzeichnet, dass** die Anordnung Mittel (8, 9, 10) umfasst, die dazu ausgestaltet sind, den Motor (1) oder den Betrieb des Motors (1) zu modifizieren, um mindestens eine interne Erregung zu induzieren, die unausgeglichene Kräfte oder Drehmomente hervorruft, die während des normalen Betriebs des Motors (1) nicht auftreten.

14. Versuchsanordnung nach Anspruch 13, wobei mindestens eine rotierende Masse (7) des Motors (1) unausgeglichen ist, um eine interne Erregung hervorzurufen.

15. Testanordnung nach Anspruch 13 oder 14, wobei die Anordnung mindestens einen Sensor (11) zum Messen von Schwingungen des Motors (1) umfasst.

## Revendications

1. Procédé permettant de tester la résistance aux tremblements de terre d'un moteur à combustion interne (1), le procédé comprenant les étapes de faire fonctionner le moteur (1) et simultanément de soumettre le moteur (1) à au moins une excitation, qui n'est pas rencontrée pendant le fonctionnement normal du moteur (1), **caractérisé en ce qu'**au moins une excitation interne est induite en modifiant le moteur (1) ou le fonctionnement du moteur (1), provoquant des forces ou des couples déséquilibrés, non rencontrés lors du fonctionnement normal du moteur.

2. Procédé selon la revendication 1, dans lequel le moteur (1) est actionné de sorte qu'au moins une des masses tournantes (7) du moteur (1) est déséquilibrée pour provoquer une excitation interne.

3. Procédé selon la revendication 1 ou 2, dans lequel au moins l'un des contrepoids du vilebrequin du moteur (1) est retiré pour provoquer une excitation interne.

4. Procédé selon l'une quelconque des revendications précédentes, dans lequel au moins une masse de balourd (8, 9, 10) est fixée à une partie tournante (7) du moteur (1) pour provoquer une excitation interne.

5. Procédé selon l'une quelconque des revendications précédentes, dans lequel une masse de balourd (8, 9) est fixée à un volant (7) du moteur (1) pour provoquer une excitation interne.

6. Procédé selon l'une quelconque des revendications précédentes, dans lequel une masse de balourd (10) est reliée à un arbre à cames du moteur (1) pour provoquer une excitation interne.

7. Procédé selon l'une quelconque des revendications précédentes, dans lequel la puissance de sortie d'au moins un cylindre du moteur (1) est modifiée pour que la puissance de sortie dudit cylindre diffère de la puissance de sortie d'au moins un autre cylindre du moteur (1) pour provoquer une excitation interne.

8. Procédé selon l'une quelconque des revendications précédentes, dans lequel l'allumage est désactivé dans au moins un cylindre du moteur (1) pour provoquer une excitation interne.

9. Procédé selon l'une quelconque des revendications précédentes, dans lequel le moteur (1) fonctionne avec un dispositif provoquant une excitation d'ordre supérieur connectée au moteur (1).

10. Procédé selon l'une quelconque des revendications précédentes, dans lequel le moteur (1) est soumis à au moins une excitation externe.

11. Procédé selon l'une quelconque des revendications précédentes, dans lequel le moteur (1) fonctionne en étant monté sur un châssis de base (3) qui est élastiquement supporté contre le sol et une source d'excitation externe (4, 5) montée sur le châssis de base (3) est utilisée pour provoquer une excitation externe.

12. Procédé selon l'une quelconque des revendications précédentes, dans lequel les vibrations du moteur (1) sont surveillées.

13. Procédé de test pour tester la résistance aux tremblements de terre d'un moteur à combustion interne (1), le dispositif de test comprenant un moteur à combustion interne (1) et des moyens (4, 5, 8, 9, 10) pour soumettre le moteur (1) à une excitation non rencontrée lors du fonctionnement normal du moteur (1), **caractérisé en ce que** l'agencement comprend des moyens (8, 9, 10) qui sont conçus pour modifier le moteur (1) ou le fonctionnement du moteur (1) pour induire au moins une excitation interne, provoquant des forces ou des couples déséquilibrés non rencontrés pendant le fonctionnement normal du moteur (1).

14. Agencement de test selon la revendication 13, dans lequel au moins une masse tournante (7) du moteur (1) est déséquilibrée pour provoquer une excitation interne.

15. Agencement d'essai selon la revendication 13 ou 14, dans lequel l'agencement comprend au moins un capteur (11) pour mesurer les vibrations du moteur (1).
